Europäisches Patentamt

European Patent Office

Office européen des brevets

(19)

(11) Publication number: **0 425 015 A2**

# EUROPEAN PATENT APPLICATION

(21) Application number: 90202746.5

(22) Date of filing: **15.10.90**

(51) Int. Cl.5: **G01B 11/02**

(30) Priority: **16.10.89 BE 8901118**

(43) Date of publication of application:
**02.05.91 Bulletin 91/18**

(84) Designated Contracting States:
**BE CH DE ES FR GB IT LI NL SE**

(71) Applicant: **BENOIT ELEKTRONIKA N.V.**
**Lindestraat 87**
**B-8790 Waregem(BE)**

(72) Inventor: **Benoit, Dirk**
**Lindestraat 87**
**B-8790 Waregem(BE)**

(74) Representative: **Dopchie, Jean-Marc**
**KORTRIJKS OCTROOI- EN MERKENBUREAU -**
**K.O.B. Kennedypark 21c**
**B-8500 Kortrijk(BE)**

(54) Method for continuously inspecting the transverse dimensions of an elongated object and apparatus for carrying out said method.

(57) Method and apparatus for inspecting the sectional irregularities of elongated objects, in particular of threads, characterised in that the product to be inspected enters at least one double wave field of transmitters and receivers, the signals received being converted into a dimensional value.

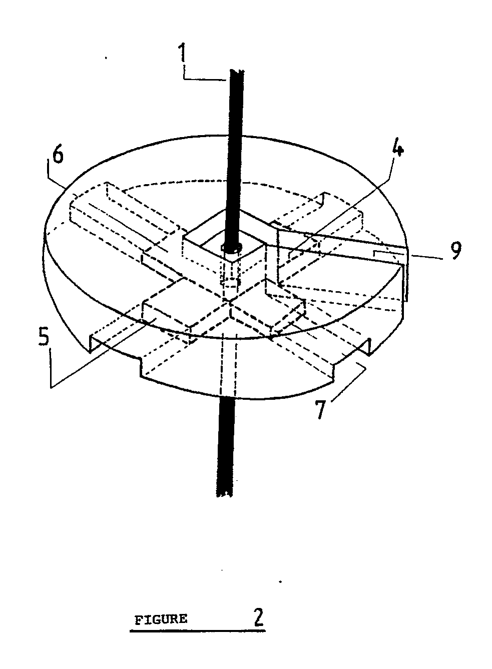

FIGURE 2

## METHOD FOR CONTINUOUSLY INSPECTING THE TRANSVERSE DIMENSIONS OF AN ELONGATED OBJECT AND APPARATUS FOR CARRYING OUT SAID METHOD

The measurement of the length of elongated objects in general does not present a problem, nor even the section if it remains the same over the entire length, but if said section exhibits irregularities, this becomes increasingly difficult. True enough, the concept of mean section, and in particular of mean diameter (if the section can be regarded more or less as a circle), is used.

The problem is still more difficult if elongated products such as textile threads which are spun onto bobbins at great speed and which are now and then flat and then sometimes exhibit thickenings are involved. Nevertheless, it can be important to detect said irregularities as quickly as possible as soon as they exceed acceptable limits (shut down machine, etc.).

The invention relates to a method of detecting said irregularities and an apparatus for carrying out said method with the object of controlling the quality of the product.

Another object of the method according to the invention is to specify a mean dimensional value of the product which has passed through.

The method according to the invention is characterised by allowing the product to be inspected to enter at least one double wave field of transmitters and receivers, the axis of the one field being perpendicular to the other field and the signal received being converted into a dimensional value by the respective receiver.

Further features and advantages of the method according to the invention will emerge from the description of the method used to inspect textile threads which are wound onto a bobbin in a spinning mill. This embodiment is illustrated by the accompanying figures without the invention being restricted to said embodiment.

Figure 1 is a diagrammatic representation of the apparatus for carrying out the method according to the invention.

Figure 2 is a perspective representation of a detector for detecting the irregularities in a textile thread which has been wound onto a bobbin of a spinning mill.

As is represented diagrammatically in Figure 1, in the method according to the invention the elongated object (1) runs perpendicularly to the plane formed by two wave fields (2 and 3) which are perpendicular to each other. If a modulated infrared wave (2) is emitted by a photodiode (4), photoreceiver (5) receives only a portion of the emitted infra-red ray, which is converted into a digital signal which is representative of the recorded transverse dimension A of the object (1).

The photoreceiver (5) is so adjusted that it provides a signal from 0 to 10 volts, 0 volt if no light falls on the receiver and 10 volts if the receiver is completely irradiated. The choice of receiver width can be varied from 1 cm to, for example, 5 cm. The partial masking of the receiver provides a signal between 0 and 10 volts this being a function of the quantity of light which, being obstructed by the object (1), reaches the receiver. Said signal is a linear function of the transverse dimension A.

In the method according to the invention, the elongated product (1) simultaneously passes through a second modulated infra-red wave (3) emitted by a second photodiode (6), the axis of wave (3) of which crosses the axis of wave (2) transversely with the consequence that photoreceiver (7) is able in its turn to transmit to the central unit (8) a converted digital signal which is representative of another transverse dimension B of the product (1) which is at right angles to the dimension A provided by the digital signal which is received by the central unit (8) from photoreceiver (5).

In the diagrammatic representation of Figure 1, the identical photocells (4 and 6) and receivers (5 and 7) have been placed at $90°$ to each other and at a distance sufficient for the radiation emission angle of $60°$ to be able to cover the object completely.

The diagonally placed photocells are unable to interfere with each other since they each operate at a very high pulse frequency. The object to be measured passes through the photocells at a certain speed.

The photocell holder is provided with a slot (9) so that when the holder is positioned, the object to be measured follows the slot (9) to the central intersection of the axes of the transmitters and receivers of the photocells.

The method according to the invention is not restricted to two transmitters and two receivers which are placed at right angles to each other. It could be imagined, for example, that three double transmitters and receivers could be used by placing them, for example, at an angle of $60°$ with respect to one another.

By processing said signals A and B in a central unit (8), which may possibly take place in a computer, it is possible, for example, to provide a mean transverse dimension $(A + B):2 = C$ which may be regarded as a characteristic of the product (1) during the instantaneous recording.

In the case of a thread which is flattened in one direction, a very small dimension A and a very large dimension B would have been obtained without C altering in value.

From this various applications are possible, such as the evolution of each dimension A, B and C on a screen.

It is possible to stop a machine if one of the dimensions A, B and C should exceed acceptable limits, for example even only if this transgression takes place solely on a minimum length of the product.

## Claims

1. Method for measuring elongated objects or for detecting irregularities in sections on elongated objects such as threads, characterised in that the object enters a double wave field or multiple wave fields of transmitters and receivers.

2. Method according to Claim 1, characterised in that the axis of each wave field of transmitters and receivers forms an identical angle with the adjacent axes of the adjacent wave field.

3. Method according to Claim 1 or 2, characterised in that the axes of the respective wave fields of transmitters and receivers are situated in one and the same plane perpendicularly to the axis of the object to be inspected.

4. Method according to Claims 1 to 3 inclusive, characterised in that the object to be inspected is continuously passed through the intersection of the axes of the various wave fields of transmitters and receivers.

5. Method according to Claims 1 to 4 inclusive, characterised in that the wave fields are composed of infra-red waves.

6. Method according to Claims 1 to 5 inclusive, characterised in that the signal received by a receiver from a corresponding transmitter is converted into a dimensional value.

7. Apparatus for measuring elongated objects or for detecting irregularities in sections in elongated objects, characterised in that there are at least two systems respectively of wave transmitters and wave receivers.

8. Apparatus according to Claim 7, characterised in that each axis of a system of wave transmitter and wave receiver forms an identical angle with the axis of the adjacent system of wave transmitter and wave receiver.

9. Apparatus according to Claims 7 and 8, characterised in that all the axes of the systems of wave transmitter and wave receiver are situated in one and the same plane and cross one another at one central point.

10. Apparatus according to Claim 9, characterised in that the holder of the systems of wave transmitter and wave receiver is provided with a slot which makes it possible to feed the object to be inspected into the central intersection point of the axes of the system of wave transmitter and wave receiver.

11. Apparatus according to one of Claims 7 to 10 inclusive, characterised in that the receiver signals are converted into a dimensional value and transmitted to a central control panel.